# EUROPÄISCHE PATENTSCHRIFT

(11) **EP 0 563 789 B1**
(45) Veröffentlichungstag und Bekanntmachung des Hinweises auf die Patenterteilung: **17.05.1995**
(21) Anmeldenummer: 93104912.6
(22) Anmeldetag: 25.03.1993
(51) Int. Cl.: B60R 21/32, H01R 35/02

(54) **Vorrichtung zur Signalübertragung zwischen zwei relativ zueinander bewegbaren Endstellen**
Device for the transmission of signals between two relatively movable terminals
Dispositif de transmission de signaux entre deux terminaux susceptibles de déplacement relatif

(30) Priorität: 30.03.1992 DE 4210357
(43) Veröffentlichungstag der Anmeldung: 06.10.1993
(73) Patentinhaber: kabelmetal electro GmbH, 30002 Hannover (DE); AUTOLIV DEVELOPMENT AKTIEBOLAG, S-447 00 Värgärda (SE)
(72) Erfinder: Persson, Dan, S-44157 Alingsas (SE); Schauer, Friedrich, S-8501 Heroldsberg (SE); Chille, Wolfgang, S-8507 Oberasbach (SE); Neuner, Andreas, S-8500 Nürnberg (SE)
(74) Vertreter: Döring, Roger, Dipl.-Ing.

(56) Entgegenhaltungen:
- EP-A- 0 525 839
- WO-A-91/17592

## Beschreibung

Die Erfindung bezieht sich auf eine Vorrichtung zur Signalübertragung zwischen zwei Endstellen, zwischen denen eine in Windungen verlaufende und in einer im wesentlichen kreisförmigen Kassette untergebrachte Leitung angeordnet ist, an die weiterführende Leitungen an den beiden Endstellen anschließbar sind und deren Länge wesentlich größer als der Abstand der beiden Endstellen voneinander ist, bei welcher mindestens eine der beiden Endstellen relativ zu der anderen bewegbar ist, bei welcher die Kassette aus zwei Teilen besteht, einem feststehenden Stator und einem drehbaren Rotor, bei welcher an einem Teil der Kassette ein unter Federkraft stehendes Halteelement befestigt ist, das in Montageposition der Kassette in gespanntem Zustand derart am anderen Teil derselben angreift, daß beide Teile in einer vorgegebenen relativen Position zueinander fixiert sind und bei welcher das Halteelement in Arbeitsposition der Kassette, in welcher der Rotor gegenüber dem Stator drehbar ist, in entspanntem Zustand durch einen Zwischenraum von dem mit der Halterung versehenen Teil getrennt ist.

Eine derartige Vorrichtung wird beispielsweise für die Übertragung eines Signals zum Auslösen des "Airbag" eines Prallschutzes für Kraftfahrzeuge benötigt. Sie ist zur Übertragung eines elektrischen oder optischen Signals im Lenkrad eines Kraftfahrzeugs untergebracht. "Leitung" im Sinne der Erfindung kann also eine elektrische oder eine optische Leitung sein. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach der EP-A-0 417 350 wird für die Signalübertragung elektrischer Strom verwendet. Die Stromübertragung erfolgt durch eine beispielsweise nach Art eines Federhauses gewickelte Flachband-Leitung - im folgenden kurz als "FBL" bezeichnet. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Für den Einbau dieser Vorrichtung in das Lenkrad eines Kraftfahrzeugs ist es daher von Bedeutung, daß die beiden Endstellen eine ganz bestimmte Position zueinander haben, mit einer entsprechenden Position der FBL, damit die vorgegebenen Umdrehungen des Rotors in beiden Drehrichtungen des Lenkrades möglich sind, ohne daß die FBL von den Endstellen abgerissen oder sonstwie zerstört wird.

Aus der gattungsbildenden WO-A-91/17592 geht eine solche elektrische Verbindungseinrichtung hervor, bei der eine elektrische Leitung zwischen einem feststehenden Stator und einem relativ zu demselben drehbaren Rotor in mehreren Windungen angeordnet ist. Am Stator dieser Vorrichtung ist ein Steg angebracht, der mittels einer Schraube bewegt werden kann und zur unverdrehbaren Fixierung von Stator und Rotor in einer Montageposition dieser Einrichtung in einen Einschnitt des Rotors eingreift.

In der nach veröffentlichten EP-A-0 525 839 wird eine Vorrichtung vorgeschlagen, wie sie eingangs beschrieben ist. Das Halteelement ist hier als Schenkelfeder ausgebildet, die schwenkbar am Stator der Kassette befestigt ist. Der Rotor hat eine auf zwei Seiten von Durchbrechungen begrenzte Lippe, auf deren Innenseite eine Nut angebracht ist. In der Montageposition der Kassette greift die Schenkelfeder in die Nut der Lippe ein. Bei einer Drehung des Rotors wird die Schenkelfeder aus der Nut herausbewegt. Sie gelangt dann durch eine der Durchbrechungen nach außen und steht in der Arbeitsposition der Kassette von derselben ab.

Der Erfindung liegt die Aufgabe zugrunde, die eingangs geschilderte Vorrichtung nach WO-A-91/17592 zu vereinfachen.

Diese Aufgabe wird gemäß der Erfindung dadurch gelöst,
- daß das Halteelement durch eine Drehung des Rotors lösbar ist und
- daß das Halteelement ein Bügel ist, der in Montageposition der Kassette mit seinem freien Ende in einer in der äußeren Oberfläche des anderen Teils der Kassette befindlichen Vertiefung festgelegt ist, die in Umfangsrichtung der Kassette gesehen einen trapezförmigen Querschnitt mit an beiden Seiten angebrachten Schrägen hat, welche vom Boden der Vertiefung ansteigend bis zu ihrer Oberkante reichen und
- daß der Bügel an seinem freien, zum Eingreifen in die Vertiefung bestimmten Ende eine Verdickung aufweist, die an beiden Seiten korrespondierend zu den Schrägen der Vertiefung abgeschrägt ist.

In dieser Vorrichtung sind Rotor und Stator der Kassette durch den Bügel in dessen Arbeitsstellung in der Montageposition fixiert, die für den Einbau in die Lenksäule eines Kraftfahrzeugs vorgegeben ist. Diese Montageposition bleibt solange erhalten, bis an dem Rotor gedreht wird. Durch eine solche, ausreichend kräftige Drehung wird der Bügel gelöst und in eine Lage gebracht, daß er vom anderen Teil der Kassette durch einen Zwischenraum getrennt ist. Der Bügel kann daher in seiner Offenstellung nicht am Rotor schleifen, der in dieser Arbeitsposition der Kassette relativ zum Stator drehbar ist. Schleifgeräusche können also nicht auftreten. Der aus Bügel und Vertiefung bestehende Verriegelungsmechanismus ist einfach gestaltet und einfach zu handhaben, da sowohl der Bügel als auch die Vertiefung außen an der Kassette angebracht sind.

Vorteilhafte Ausgestaltungen der Erfindung gehen aus den Unteransprüchen hervor.

Ausführungsbeispiele des Erfindungsgegenstandes sind in den Zeichnungen dargestellt.

Es zeigen:
Fig. 1 schematisch einen Querschnitt durch eine Kassette mit einer Vorrichtung nach der Erfindung.
Fig. 2 eine Ansicht einer geschlossenen Kassette.
Fig. 3 einen Abschnitt der Kassette nach Fig. 2 in vergrößerter Darstellung im Schnitt.
Fig. 4 eine Einzelheit der Kassette nach Fig. 2 ebenfalls in vergrößerter Darstellung.

Die Erfindung wird im folgenden für eine Kassette beschrieben, in der eine Flachbandleitung (FBL) mit elektrischen Leitern angebracht ist. Statt der FBL könnte aber auch eine Leitung mit mindestens einem Lichtleiter eingesetzt werden. Auch eine kombinierte Leitung mit elektrischen und optischen Leitern könnte verwendet werden.

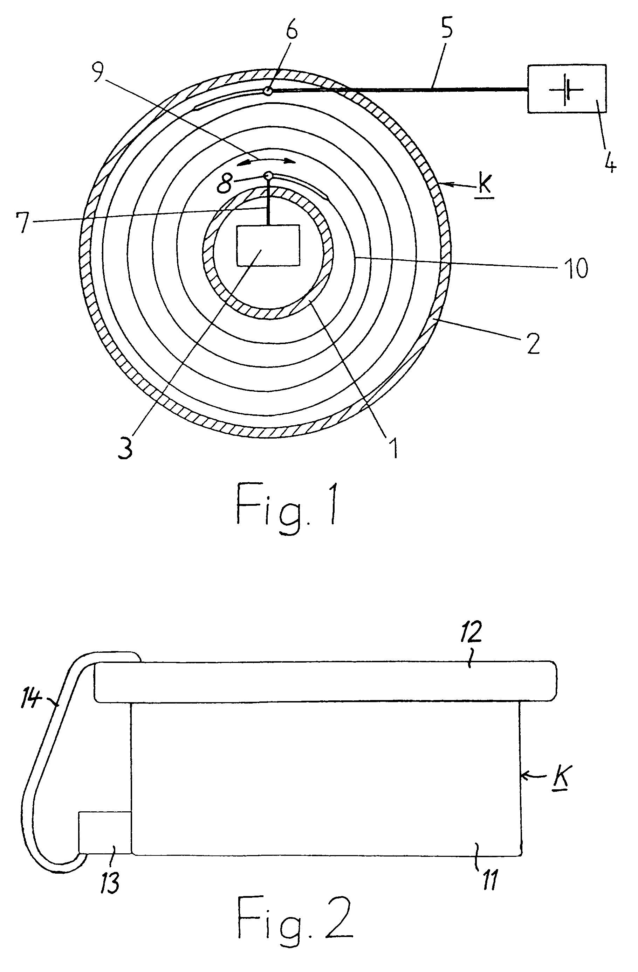

In Fig. 1 sind schematisch zwei beispielsweise kreisförmig ausgebildete Wände 1 und 2 einer Kassette K dargestellt. Sie ist für den Einbau in das Lenkrad eines Kraftfahrzeugs bestimmt. Zur Stromversorgung einer Elektronik 3, durch deren Signal ein Prallsack ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine FBL 10 mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses bzw. Abschlusses an den Endstellen 6 und 8 sind nicht genauer dargestellt. Sie sind prinzipiell in unterschiedlichen Varianten bekannt und hier nicht von Bedeutung.

Die FBL 10 kann gemäß Fig. 1 in der Kassette K zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickels verkleinert bzw. vergrößert.

Die in Fig. 2 dargestellte Kassette K besteht aus einem Stator 11 und einem Rotor 12. Der Stator 11 ist fest mit der Lenksäule eines Kraftfahrzeugs verbindbar, während der Rotor 12 mit dem Lenkrad dieses Kraftfahrzeugs drehbar ist. Im Stator 11 ist die FBL 10 etwa so untergebracht, wie es in Fig. 1 dargestellt ist. Die Stellen, an denen die FBL 10 bzw. ihre Enden aus der Kassette K herausgeführt sind, gehen aus Fig. 2 nicht hervor.

Im dargestellten Ausführungsbeispiel ist an der Umfangsfläche des Stators 11 der Kassette K an einem Halter 13 ein Bügel 14 befestigt, der unter Federkraft steht. Dazu kann der Bügel 14 selbst aus federndem Material bestehen. Es ist jedoch auch möglich, eine auf denselben einwirkende Feder einzusetzen. In der aus Fig. 2 ersichtlichen Arbeitsposition des Bügels 14 ist derselbe auch am Rotor 12 festgelegt. Der Rotor 12 hat damit eine Position gegenüber dem Stator 11, die der Montageposition der Kassette K entspricht. Er ist dadurch gegenüber dem Stator 11 fixiert. Diese Montageposition ist auch dann fixierbar, wenn der Bügel 14 am Rotor 12 befestigt und mit seinem freien Ende am Stator 11 festgelegt ist. Er wird dann in der "Offenstellung" bei der Drehung des Rotors 12 mit diesem gedreht. Im folgenden wird davon ausgegangen, daß der Bügel 14 am Stator 11 befestigt ist.

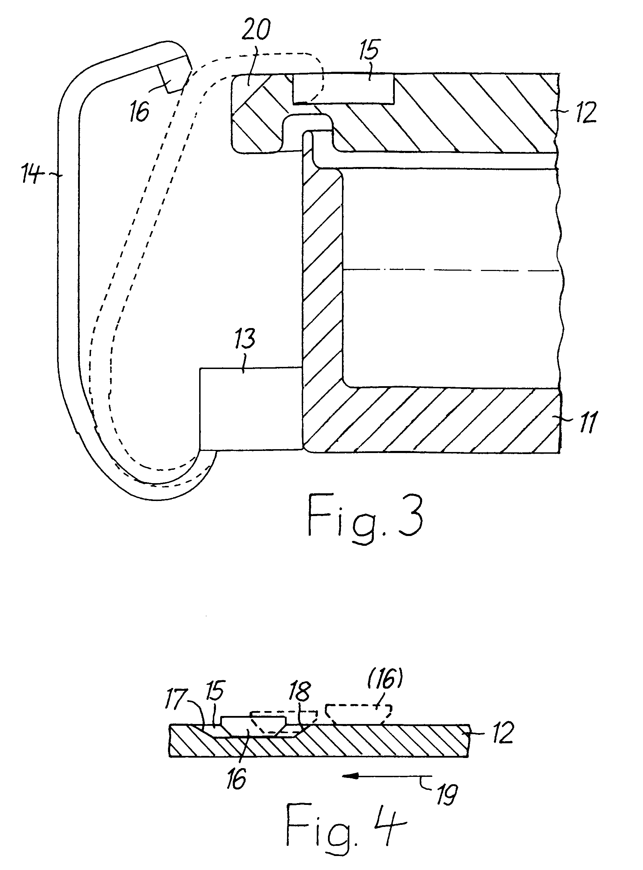

Der Bügel 14 besteht vorzugsweise aus Federstahl. Er kann jedoch auch aus einem federnden Kunststoff bestehen, wenn sichergestellt ist, daß dieser Kunststoff seine federnde Eigenschaft langfristig beibehält. Der Bügel 14 ist an einer Halterung des Rotors 12 festgelegt, die im Zusammenwirken mit dem freien Ende des Bügels 14 so ausgebildet ist, daß der Bügel 14 bei einer Drehung des Rotors 12 um die Achse der Kassette K automatisch von der Halterung gelöst wird und in seine aus der vergrößerten Darstellung in Fig. 3 ersichtliche Offenstellung federt, so daß der Rotor 12 anschließend ohne Berührung mit dem Bügel 14 relativ zum Stator 11 drehbar ist.

Die Halterung des Bügels 14 am Rotor 12 der Kassette K besteht aus einer Vertiefung 15, die beispielsweise in der äußeren Stirnfläche des Rotors 12 angebracht ist. Die Breite der Vertiefung 15 entspricht der Breite des Bügels 14 an seinem freien Ende. Der Bügel 14 greift mit einer an seinem freien Ende angebrachten Verdickung 16 in die Vertiefung 15 ein, so daß er in gespanntem Zustand in der in Fig. 2 direkt und in Fig. 3 gestrichelt eingezeichneten Lage gehalten ist.

Die Vertiefung 15 hat gemäß der Darstellung in Fig. 4 in Umfangsrichtung der Kassette K gesehen einen trapezförmigen Querschnitt. Sie weist an beiden in Umfangsrichtung des Rotors 12 liegenden Seiten Schrägen 17 und 18 auf, die von ihrem Boden ansteigend bis zu ihrer Oberkante reichen. Die in Fig. 4 eingezeichnete Verdickung 16 des Bügels 14 ist korrespondierend zu den Schrägen 17 und 18 abgeschrägt. Wenn der Rotor 12 beispielsweise in Richtung des Pfeiles 19 gedreht wird, dann wird die Verdickung 16 durch die zusammenwirkenden Schrägen der Vertiefung 15 einerseits und der Verdickung 16 andererseits in die aus Fig. 4 gestrichelt ersichtlichen Positionen gebracht. Die Verdickung 16 kommt dadurch von der Vertiefung 15 frei und der Bügel 14 wird nicht mehr am Rotor 12 gehalten. Er federt vielmehr in seine aus Fig. 3 ersichtliche Offenposition. In dieser Position ist der Bügel 14 ausreichend weit von der Kassette K entfernt, so daß er nicht am Rotor 12 schleifen kann.

An der Kante des Rotors 12 kann im Bereich der Vertiefung 15 eine Schräge 20 angebracht sein, durch welche der Bügel 14 leichter so auf den Rotor 12 aufgeschnappt werden kann, daß er in der Vertiefung 15 einrastet. Die Schräge 20 beginnt am Rand des Rotors 12 und steigt mit kleiner werdendem Durchmesser desselben an. Der Bügel 14 kann dadurch leicht wieder in die Montageposition gebracht werden, wenn die Kassette K für Reparaturzwecke ausgebaut und später wieder eingebaut werden soll.

## Patentansprüche

1. Vorrichtung zur Signalübertragung zwischen zwei Endstellen (6,8), zwischen denen eine in Windungen verlaufende und in einer im wesentlichen kreisförmigen Kassette (K) untergebrachte Leitung (10) angeordnet ist, an die weiterführende Leitungen an den beiden Endstellen (6,8) anschließbar sind und deren Länge wesentlich größer als der Abstand der beiden Endstellen (6,8) voneinander ist, bei welcher mindestens eine der beiden Endstellen (6,8) relativ zu der anderen bewegbar ist, bei welcher die Kassette (K) aus zwei Teilen besteht, einem feststehenden Stator (11) und einem drehbaren Rotor (12), bei welcher an einem Teil der Kassette (K) ein unter Federkraft stehendes Halteelement befestigt ist, das in Montageposition der Kassette (K) in gespanntem Zustand derart am anderen Teil derselben angreift, daß beide Teile in einer vorgegebenen relativen Position zueinander fixiert sind und bei welcher das Halteelement in Arbeitsposition der Kassette (K), in welcher der Rotor (12) gegenüber dem Stator (11) drehbar ist, in entspanntem Zustand durch einen Zwischenraum von dem mit der Halterung versehenen Teil getrennt ist, dadurch gekennzeichnet,
- daß das Halteelement durch eine Drehung des Rotors (12) lösbar ist,
- daß das Halteelement ein Bügel (14) ist, der in Montageposition der Kassette (K) mit seinem freien Ende in einer in der äußeren Oberfläche des anderen Teils der Kassette (K) befindlichen Vertiefung (15) festgelegt ist, die in Umfangsrichtung der Kassette (K) gesehen einen trapezförmigen Querschnitt mit an beiden Seiten angebrachten Schrägen (17,18) hat, welche vom Boden der Vertiefung (15) ansteigend bis zu ihrer Oberkante reichen und
- daß der Bügel (14) an seinem freien, zum Eingreifen in die Vertiefung (15) bestimmten Ende eine Verdickung (16) aufweist, die an beiden Seiten korrespondierend zu den Schrägen (17,18) der Vertiefung (15) abgeschrägt ist.

2. Vorrichtung nach Anspruch 1, dadurch gekennzeichnet, daß der Bügel (14) am Stator (11) befestigt ist.

3. Vorrichtung nach Anspruch 1 oder 2, dadurch gekennzeichnet, daß der Bügel (14) an der Umfangsfläche des Stators (11) befestigt ist.

4. Vorrichtung nach einem der Ansprüche 1 bis 3, dadurch gekennzeichnet, daß die Vertiefung (15) in der außen liegenden Stirnfläche des Rotors (12) angebracht ist.

5. Vorrichtung nach einem der Ansprüche 1 bis 4, dadurch gekennzeichnet, daß an der Kante des Rotors (12) im Bereich der Vertiefung (15) eine Schräge (20) angebracht ist, die am Rand des Rotors (12) beginnend mit kleiner werdendem Durchmesser desselben zu seiner Oberfläche ansteigt.

## Claims

1. A device for transferring a signal between two end points (6,8) between which a coiled conductor (10) is arranged within a substantially circular cassette (K), to which extending conductors are attached at the two end points (6,8), the length of the conductor (10) being substantially greater than the distance between the two points (6,8), and at least one of the two end points (6,8) being movable relative to the other, the cassette (K) comprising a stationary stator (11) and a rotor (12) rotatable relative to the stator (12), a holding element connected to a first part of said cassette (K), said holding element being activatable under spring force to act, in a mounting position of the cassette (K), on a second part of the cassette (K) to hold the two parts fixed in a predetermined position relative to each other and wherein the holding element in an operating position of the cassette (K), in which the rotor (12) is rotatable relative to the stator (11), is separated with clearance space from the second part of the cassette (K), charactarized in
- that the holding element can be loosened by a rotation of the rotor (12),
- that the holding element is a clamp (14), which in the mounting position of the cassette (K) is fixed with its free end in a depression (15) of the second part of the cassette (K) aranged in the surface of the same, the depression (15), viewed in a circumferential direction of the cassette (K), has a trapezoidal cross section with bevels (17,18) arranged on opposite sides of the depression (15), the bevels (17,18) extending from a bottom of the depression (15) up to its upper edge and
- that the clamp (14) has a thickening (16) on its free end for engagement in the depression (15), the thickening (16) being beveled on opposite sides thereof in correspondence to the bevels (17,18) of the depression (15).

2. A device according to claim 1, charactarized in that the clamp (14) is fastened to the stator (11).

3. A device according to claim 1 or 2, charactarized in that the clamp (14) is fastened to a circumferential surface of the stator (11).

4. A device according to one of the claims 1 to 3, charactarized in that the depression (15) is aranged at an outer end surface of the rotor (12).

5. A device according to one of the claims 1 to 4, charactarized in that a bevel (20) is located on an edge of the rotor (12) in a region of the depression (15), the bevel (20) rising, beginning at the edge of the rotor (12), with decreasing diameter towards the surface of the rotor (12).

## Revendications

1. Dispositif de transmission de signaux entre deux positions terminales (6, 8) entre lesquelles est disposé un conducteur (10) qui se présente sous forme de spires, qui est logé dans une cassette (K) de forme sensiblement circulaire, auquel des conducteurs, poursuivant le circuit, peuvent être reliés aux deux positions terminales (6, 8) et dont la longueur est sensiblement supérieure à la distance mutuelle des deux positions terminales (6, 8), dispositif dans le cas duquel au moins l'une des deux positions terminales (6, 8) est mobile par rapport à l'autre, dans le cas duquel la cassette (K) est constituée de deux parties, un stator fixe (11) et un rotor tournant (12), dans le cas duquel, à une partie de la cassette (K), est fixé un élément de maintien qui se tient sous la force d'un ressort, qui, en position de montage de la cassette (K), agit, à l'état bridé, sur l'autre partie de cette cassette de façon telle que les deux parties sont fixées dans une position mutuelle relative prescrite et dans le cas duquel, dans la position de travail de la cassette (K) dans laquelle le rotor (12) peut tourner par rapport au stator (11), l'élément de maintien, à l'état non bridé, est séparé de la partie munie de l'appui par un espace intermédiaire, caractérisé
- par le fait qu'une rotation du rotor (12) peut détacher l'élément de maintien,
- par le fait que l'élément de maintien est un arc (14) qui, dans la position de montage de la cassette (K), est fixé, par son extrémité libre, dans un évidement qui se trouve dans la surface extérieure de l'autre partie de la cassette (K), et qui, vu selon la direction périphérique de la cassette (K), a une section trapézoïdale avec des pentes obliques (17, 18) qui sont prévues des deux côtés et qui, depuis le fond de l'évidement (15), vont en montant jusqu'à son bord supérieur et
- par le fait que l'arc (14) présente, à son extrémité libre, prévue pour venir en prise dans l'évidement (15), un épaississement (16) qui, des deux côtés, est chanfreiné en correspondance avec les pentes obliques (17, 18) de l'évidement (15).

2. Dispositif selon la revendication 1, caractérisé par le fait que l'arc (14) est fixé au stator (11).

3. Dispositif selon la revendication 1 ou 2, caractérisé par le fait que l'arc (14) est fixé à la surface périphérique du stator (11).

4. Dispositif selon l'une des revendications 1 à 3, caractérisé par le fait que l'évidement (15) est prévu dans la surface frontale du rotor (12) située à l'extérieur.

5. Dispositif selon l'une des revendications 1 à 4, caractérisé par le fait que sur l'arête du rotor (12), dans la zone de l'évidement (15), est prévu un chanfrein (20) qui commence au bord du rotor (12) et monte jusqu'à la surface du rotor en en diminuant le diamètre.
